# EUROPEAN PATENT SPECIFICATION

(11) **EP 4 111 248 B1**
(45) Date of publication and mention of the grant of the patent: **27.08.2025**
(21) Application number: 20726306.2
(22) Date of filing: 04.05.2020
(51) Int. Cl.: G02B 7/09, G02B 27/64, G02B 7/04, G03B 5/02

(54) **LENS POSITIONING MODULE**
LINSENPOSITIONIERUNGSMODUL
MODULE DE POSITIONNEMENT DE LENTILLE

(43) Date of publication of application: 04.01.2023
(73) Proprietor: Huawei Technologies Co., Ltd., Shenzhen, Guangdong 518129, (CN)
(72) Inventor: EROMAKI, Marko, 16440 Kista (SE)
(74) Representative: Isarpatent
(86) International application number: PCT/EP2020/062231
(87) International publication number: WO 2021/223830

(56) References cited:
- EP-A1- 3 364 233
- EP-A1- 3 567 847
- EP-A1- 3 605 222
- CN-U- 209 373 236
- US-A1- 2015 201 128
- US-A1- 2019 058 832

## Description

### Field of the Invention

The present invention relates to a lens positioning module, a camera comprising the lens positioning module, and a portable telecommunications device.

### Background of the Invention

It is known for portable telecommunications devices to be equipped with image capture apparatus comprising at least one digital camera. For example, a smartphone may comprise a front-facing camera in addition to at least one rear-facing camera. The rear side of a smartphone may feature a dual-camera system, in which a secondary camera for providing or supplementing a specific capability, such as a close-up, wide-angle, monochrome, low-light or depth of field function, is provided along with a primary camera. A plurality of cameras may be utilized to provide different imaging modes. For example, a macro lens, a wide-angle lens, an ultra wide-angle lens and a telephoto lens are usable in different photography styles and techniques. A multiple-camera arrangement may comprise a combination of different lenses and/or lenses of the same type but having different resolutions.

A lens actuator unit incorporating auto focus (AF) and optical image stabilisation (IOS) functions is known in which a single lens holder is driven by a discrete, voice coil (VCM) actuator constructed from a coil-and-magnet system that comprises a plurality of coils positioned relative to a set of four magnets that surround the lens holder. A dual-lens or dual-cavity actuator unit for controlling the position of two lens holders is known in which the arrangement of the aforementioned lens actuator unit is essentially duplicated but with each set of four magnets having a magnet in common, this approach using two separate magnetic circuits with partial sharing for producing electromotive for with moving coils.

With the arrangement of these known actuator units, the freedom of placement of cameras within a smartphone is limited, and must accommodate a safety distance between adjacent magnetic systems to avoid interference.

EP 3 605 222 A1 discloses a dual lens driving apparatus comprising: a housing; a first bobbin disposed inside the housing; a second bobbin disposed inside the housing and positioned away from the first bobbin; a first coil disposed on the first bobbin; a second coil disposed on the second coil; a magnet disposed in the housing and positioned opposite from the first coil and second coil; a base disposed below the housing; a board disposed between the housing and the base and opposite from the magnet and comprising a circuit member having a third coil; and a supporting member movably supporting the housing with respect to the board. The third coil comprises a first axial coil which is disposed in a first direction and a second axial coil which is disposed in a second direction different from the first direction. The first axial coil comprises four first axial coil units which are positioned away from one another. The four first axial coil units are connected to one another. The second axial coil comprises four second axial coil units which are positioned away from one another. The four second axial coil units are connected to one another.

EP 3 567 847 A1 also discloses to a dual lens drive device that comprises: a housing; a first bobbin which is disposed to move in a first direction inside the housing; a second bobbin which is disposed to move in the first direction inside housing and is spaced apart from the first bobbin; a first coil which is disposed on the first bobbin; a second coil which is disposed on the second bobbin; a magnet which is disposed in the housing and faces the first coil and the second coil; a base which is disposed below the housing; a substrate which comprises a circuit member having a third coil disposed to face the magnet between the housing and the base; and a support member which movably supports the housing with respect to the substrate, wherein the housing is integrally formed.

US 2019/058832 A1 discloses an image capturing module having multiple lenses, in which primary driving magnets of auto-focus module equipped in a first lens module and a second lens module will not cover an adjacent surface located between these two lens modules in the same time. A relatively smaller magnet is used to be the auxiliary driving magnet of optical image stabilization (OIS) module equipped in the first lens module and the second lens module. By using the aforementioned configuration of the primary and auxiliary driving magnets, interference of magnetic fields is minimized, and thus the distance between the first and second lens modules can be decreased, and the space of mobile phone having the image capturing module is saved. Moreover, such configuration can be used on the image capturing module having many lens modules.

### Summary of the Invention

Therefore, the object of the present invention is to provide a lens positioning module, a camera comprising the lens positioning module, and a portable telecommunications device that minimise limitations on the degree of design freedom regarding the placement of a multi-camera system within the architecture of a device. This object is solved by the attached independent claims and further embodiments and improvements of the invention are listed in the attached dependent claims.

According to a first aspect according to the invention, the invention provides a lens positioning module, comprising: two or more lens carrier units, each lens carrier unit having a longitudinal axis; a magnetic hub comprising at least one magnetic element; the two or more lens carrier units spaced around an outer perimeter of the magnetic hub with the longitudinal axes of the lens carrier units oriented perpendicular to a base plane; each lens carrier unit associated with a respective auto-focus (AF) drive arrangement, each auto-focus (AF) drive arrangement comprising a respective first coil co-operable with the magnetic hub to separately move the associated lens carrier unit along its longitudinal axis; and the two or more lens carrier units collectively associated with a common optical image stabilisation (OIS) drive arrangement, the optical image stabilisation (OIS) drive arrangement comprising two or more second coils and co-operable with the magnetic hub to move the two or more lens carrier units unitedly in at least one direction parallel to the base plane.

Multiple lens carrier units are driven by a common actuator structure, with the lens carrier units (and hence the lenses carried thereby) being separately movable in an auto-focussing (AF) direction and unitedly movable in an optical image stabilisation (OIS) direction.

The lens carrier units may be movable by the optical image stabilisation (OIS) drive arrangement in only one direction, or in each of a plurality of directions, parallel to the base plane.

The lens positioning module further comprises, according to the invention, a carrier frame for guiding united movement of the lens carrier units by the optical image stabilisation (OIS) drive arrangement, in which the magnetic hub and each lens carrier unit is located in a respective receiving region defined by the carrier frame.

This arrangement serves to ensure stable and repeatable united movement of the lens carrier units in an optical image stabilisation (OIS) direction.

According to the invention, the second coils of the optical image stabilisation (OIS) drive arrangement are carried by a base portion; a lens barrel of each lens carrier unit may be suspended from the carrier frame by a respective flexure arrangement; and two or more suspension wires may extend between the base portion and the carrier frame for guiding movement of the carrier frame relative to the base portion by the optical image stabilisation (OIS) drive arrangement.

This arrangement also serves to ensure stable and repeatable united movement of the lens carrier units in an optical image stabilisation (OIS) direction.

The base plane may be coincident with a surface, such as an upper surface, of the base portion.

The base portion may carry a module control circuit, each flexure arrangement may comprise a first flexure section having a positive terminal and a second flexure section having a negative terminal, each lens carrier unit electrically connected to its associated first coil via its respective flexure arrangement; and the first coil associated with each lens carrier unit may be electrically connected to the module control circuit via said respective flexure arrangement and said two or more suspension wires.

With this arrangement, the flexure arrangement and suspension wires are beneficially used to route power to the first coils.

According to the invention, the magnetic hub comprises a single said magnetic element, the outer perimeter of the magnetic hub is quadrate, comprising four exterior sides and four exterior corners. The two or more lens carrier units comprises four lens carrier units, with a respective one of the four lens carrier units positioned along a respective one of the four exterior sides of the outer perimeter.

Four lens carrier units can then be driven by a common actuator structure, with each of the four lens carrier units being separately movable in an auto-focussing (AF) direction and all four lens carrier units being unitedly movable in an optical image stabilisation (OIS) direction.

The first coils of the four lens carrier units may be oriented perpendicular to the second coils.

The two or more suspension wires may comprise four pairs of suspension wires, each pair of the four pairs of suspension wires positioned at a respective one of the four exterior corners of the outer perimeter. The positive terminals of the flexure arrangements may be separately electrically connected to the module control circuit via a respective one of the suspension wires, and the negative terminals of the flexure arrangements may be separately electrically connected to the module control circuit via a respective one of the suspension wires or may be electrically connected to each other and commonly electrically connected to the module control circuit via a further one of the suspension wires.

According to the invention in a second aspect, the magnetic hub comprises a group of four said magnetic elements arranged to form a hollow, discontinuous quadrate shape, the outer perimeter of the magnetic hub is quadrate, comprising four exterior sides and four exterior corners; and an inner perimeter of the magnetic hub defines an interior region. The two or more lens carrier units comprises five lens carrier units, with one lens carrier unit of the five lens carrier units positioned in the interior region and a respective one of the other four lens carrier units of the five lens carrier units positioned along a respective one of the four exterior sides of the outer perimeter.

The first coil of the lens carrier unit positioned in the interior region may be parallel to the second coils and the first coils of the other four lens carrier units may be oriented perpendicular to the second coils.

The two or more suspension wires may comprise four pairs of suspension wires, each pair of the four pairs of suspension wires positioned at a respective one of the four exterior corners of the outer perimeter. The positive terminals of the flexure arrangements may be separately electrically connected to the module control circuit via a respective one of the suspension wires and the negative terminals of the flexure arrangements may be electrically connected to each other and commonly electrically connected to the module control circuit via a further one of the suspension wires.

In an example, the optical image stabilisation (OIS) drive arrangement comprises a ball guide system. In an example, the optical image stabilisation (OIS) drive arrangement comprises a linear guide system.

These types of guide systems provide additional robustness when compared with, for example, spring suspension systems.

According to a third aspect according to the invention, is the invention provides a camera comprising a lens positioning module, the lens positioning module according to the first aspect.

In a specific example, a second lens positioning module is positioned adjacent the lens positioning module, the second lens positioning module according to the first aspect.

With the multiple lens carrier units of each lens positioning module being driven by a common actuator structure (in which the lens carrier units are separately movable in an auto-focussing (AF) direction and unitedly movable in an optical image stabilisation (OIS) direction), like units can advantageously be placed side-by-side without any undesirable interference being experienced. Therefore, in addition to cost reductions, the actuator arrangement of the lens positioning module enables volumetric space reductions when integrated additional lens carrier units into a device, when compared with using discrete or dual-cavity actuators. Limitations on design freedom regarding placement within the device architecture is also minimised.

According to a fourth aspect according to the invention, is the invention also provides a portable telecommunications device comprising a camera, the camera according to the second aspect.

The portable telecommunications device may be a smartphone.

According to a fourth aspect, wherein the fourth aspect and any of its implementations and options below are not claimed, there is provided a method of providing a lens positioning module, comprising the steps of: receiving two or more lens carrier units, each lens carrier unit having a longitudinal axis; receiving a magnetic hub comprising at least one magnetic element; spacing the two or more lens carrier units around an outer perimeter of the magnetic hub with the longitudinal axes of the lens carrier units oriented perpendicular to a base plane; associating each lens carrier unit with a respective auto-focus (AF) drive arrangement, each auto-focus (AF) drive arrangement comprising a respective first coil co-operable with the magnetic hub to separately move the associated lens carrier unit along its longitudinal axis; and associating the two or more lens carrier units collectively with a common optical image stabilisation (OIS) drive arrangement, the optical image stabilisation (OIS) drive arrangement comprising two or more second coils and co-operable with the magnetic hub to move the two or more lens carrier units unitedly in at least one direction parallel to the base plane.

In the examples disclosed herein, the principles of a magnet-and-coil arrangement as used in known discrete or dual-cavity VCM actuators are utilised to advantageously provide a common actuator structure for driving multiple lens carrier units, resulting in significant cost and integration improvements.

A multi-optics driving system for an AF-OIS actuator, and associated method, is thus disclosed.

### Brief Description of the Drawings

The present invention will now be more particularly described, with reference to the accompanying drawings, in which:
**Figure 1** shows a lens positioning module according to a first example;
**Figure 2** is a schematic of a magnet-and-coil arrangement of the lens positioning module of the first example;
**Figure 3** shows components of the lens positioning module of **Figure 1****;**
**Figure 4** is a schematic illustrating directions of lens carrier unit positioning directions provided by the magnet-and-coil actuator of the lens positioning module of the first example;
**Figure 5** shows an exploded view of a lens unit according to a first example, the lens unit comprising the lens positioning module of **Figure 1****;**
**Figure 6** shows a sectional view of the lens unit of **Figure 5****,** illustrating actuator positioning directions.
**Figure 7** is a bock diagram of a camera comprising a lens positioning module according to the first example;
**Figure 8** shows an arrangement of two lens units, each lens unit comprising a lens positioning module according to the first example;
**Figure 9** shows a lens positioning module according to a second example;
**Figure 10** a lens unit according to a second example, the lens unit comprising the lens positioning module of **Figure 9****;**
**Figure 11** shows components of the lens positioning module of **Figure 9****;**
**Figure 12** is a schematic illustrating directions of lens carrier unit positioning directions provided by the magnet-and-coil actuator of the lens positioning module of the second example;
**Figure 13** shows a sectional view of the lens unit of **Figure 10****,** illustrating actuator positioning directions.
**Figure 14** shows an exploded view of the lens unit according to the second example, comprising the lens positioning module of **Figure 9****;** and
**Figure 15** illustrates two lens positioning modules according to the second example side-by-side.

### Description

Examples are described below, with reference to the accompanying drawings, in sufficient detail to enable those of ordinary skill in the art to implement the apparatus, systems and/or processes described herein. However, it is to be understood that the invention is not limited to the precise examples described and/or shown and that various changes and modifications can be effected by one skilled in the art without departing from the scope of the invention as defined by the appended claims.

In the following description, all orientational terms, such as upper, lower, radially and axially, are used in relation to the drawings and should not be interpreted as limiting the scope of the invention as defined by the appended claims unless the context clearly indicates otherwise.

The drawings are not necessarily drawn to scale, and in some instances the drawings may have been exaggerated or simplified for illustrative purposes only.

Unless otherwise defined, all terms (including technical and scientific terms) used herein are to be interpreted as is customary in the art. In addition, features referred to herein in the singular can number one or more, unless the context clearly indicates otherwise. Similarly, the terms "comprises", "comprising", "includes", "including", "has" and/or "having" when used herein, specify the presence of the stated feature or features and do not preclude the presence or addition of one or more other features, unless the context clearly indicates otherwise.

A lens positioning module is disclosed herein, the lens positioning module comprising two or more lens carrier units, each lens carrier unit having a longitudinal axis; a magnetic hub comprising at least one magnetic element; the two or more lens carrier units spaced around an outer perimeter of the magnetic hub with the longitudinal axes of the lens carrier units oriented perpendicular to a base plane; each lens carrier unit associated with a respective auto-focus (AF) drive arrangement, each auto-focus (AF) drive arrangement comprising a respective first coil co-operable with the magnetic hub to separately move the associated lens carrier unit along its longitudinal axis; and the two or more lens carrier units collectively associated with a common optical image stabilisation (OIS) drive arrangement, the optical image stabilisation (OIS) drive arrangement comprising two or more second coils and co-operable with the magnetic hub to move the two or more lens carrier units unitedly in at least one direction parallel to the base plane.

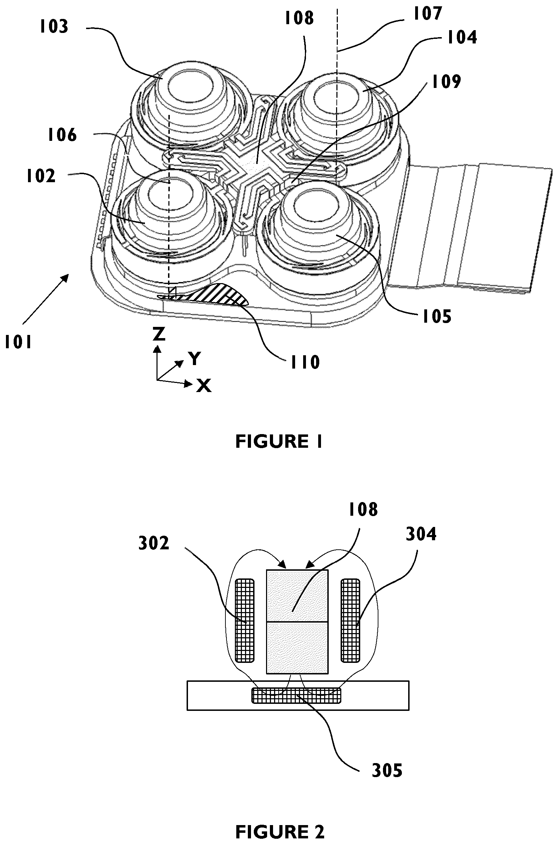

A lens positioning module 101 according to a first specific example will now be described with reference to **Figures 1 to 8****.**

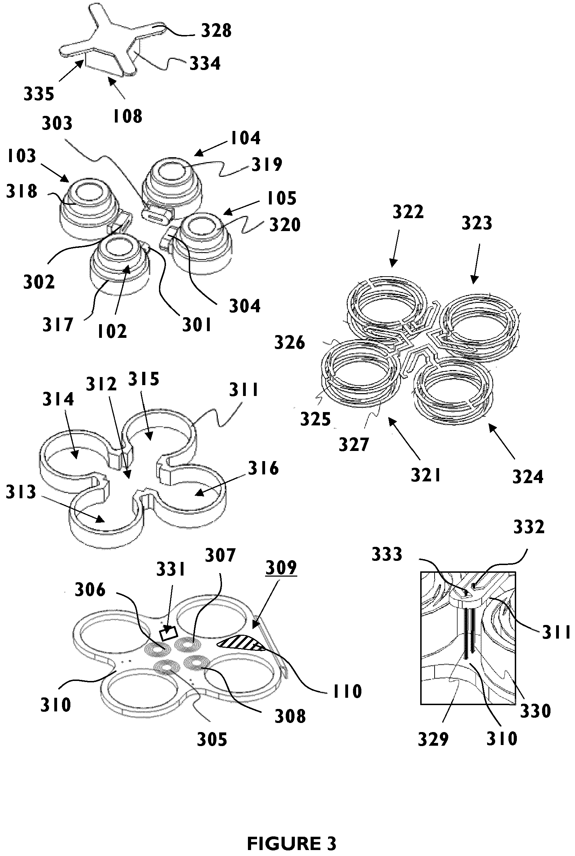

Reference is made initially to **Figures 1** **and** **3****.** The lens positioning module 101 comprises two or more, in this example four, lens carrier units 102-105. Each of the lens carrier units 102-105 has a longitudinal axis, such as longitudinal axis 106 of lens carrier unit 102 and longitudinal axis 107 of lens carrier unit 104. The lens positioning module 101 further comprises a magnetic hub 108. The magnetic hub 104 has an outer perimeter 109. The lens carrier units 102-105 are spaced around the outer perimeter 109 of the magnetic hub 108 with the longitudinal axes of the lens carrier units 102-105 oriented perpendicular to a base plane, indicated at 110.

Cartesian co-ordinate axes are shown, with the Z-axis indicating the longitudinal axes of the lens carrier units and the X-axes and Y-axes indicating the 2-dimensional base plane.

Each lens carrier unit 102-105 is associated with a respective auto-focus (AF) drive arrangement. Each auto-focus (AF) drive arrangement comprises a respective first coil 301-304 co-operable with the magnetic hub 108 to separately move the associated lens carrier unit 102-105 along its longitudinal axis. Thus, lens carrier unit 102 is associated with a respective auto-focus (AF) drive arrangement, comprising a first coil 301 co-operable with the magnetic hub 108 to separately move the lens carrier unit 102 along its longitudinal axis 106 and lens carrier unit 105 is associated with a respective auto-focus (AF) drive arrangement comprising a first coil 304 co-operable with the magnetic hub 108 to separately move the lens carrier unit 104 along its longitudinal axis 107.

The lens carrier units 102-105 are collectively associated with a common optical image stabilisation (OIS) drive arrangement. The optical image stabilisation (OIS) drive arrangement comprising two or more, in this example four, second coils 305-308 and co-operable with the magnetic hub 108 to move the lens carrier units 102-105 unitedly in at least one direction parallel to the base plane 110.

In this example, the base plane 110 is coincident with a surface, in this illustrated example an upper surface 309, of a base portion 310 that the second coils 305-308 of the optical image stabilisation (OIS) drive arrangement are carried by. In this example also, the second coils 305-308 of the optical image stabilisation (OIS) drive arrangement are embedded within the base portion 310. As shown, the second coils 305-308 do not protrude from the upper surface 309.

The lens positioning module 101 further comprises a carrier frame 311 for guiding united movement of the lens carrier units 102-105 by the optical image stabilisation (OIS) drive arrangement. The magnetic hub 108 and each lens carrier unit 102-105 is located in a respective receiving region 312-316 defined by the carrier frame 311.

A lens barrel 317-320 of each lens carrier unit 102-105 is suspended from the carrier frame 311 by a respective flexure arrangement 321-324, each of which comprises first and second upper flexure sections and a lower flexure section, such as first and second upper flexure sections 325, 326 and lower flexure section 327 of flexure arrangement 321.

As illustrated, a support frame 328 is shown secured to the magnetic hub 108.

As illustrated, two or more suspension wires, such as suspension wires 329, 330, extend between the base portion 310 and the carrier frame 311 (via the support frame 328), for guiding movement of the carrier frame 311 relative to the base portion 310 by the optical image stabilisation (OIS) drive arrangement.

The base portion 310 carries a module control circuit, indicated generally at 331. In this example, the base portion 310 is a printed wiring board (PWB).

A first flexure section of each flexure arrangement has a positive terminal, such as positive terminal 332 of first upper flexure section 325 of flexure arrangement 321, and a second flexure section of each flexure arrangement has a negative terminal, such as negative terminal 333 of second upper flexure section 326 of flexure arrangement 321.

Each lens carrier unit is electrically connected to its associated first coil via its respective flexure arrangement, such as lens carrier unit 102 being electrically connected to its associated first coil 301 by its respective flexure arrangement 321.

The first coil associated with each lens carrier unit is electrically connected to the module control circuit via its respective flexure arrangement and two or more suspension wires, such as first coil 301 associated with lens carrier unit 102 being electrically connected to module control circuit 330 by the two suspension wires 329, 330.

In this first example, the magnetic hub 108 comprises a single magnetic element 334. The outer perimeter 109 of the magnetic hub 108 is quadrate, comprising four exterior sides and four exterior corners. A respective one of the four lens carrier units 102-105 is positioned along a respective one of the four exterior sides of the outer perimeter 109 of the magnetic hub 108.

In this example, the first coils 301-304 of the four lens carrier units 102-105 are oriented perpendicular to the second coils 305-305. This can be seen in particular from **Figures 1****,** **3** **&** **4****.**

In this first example, the lens positioning module 101 comprises four pairs of suspension wires, each pair of the four pairs of suspension wires positioned at a respective one of the four exterior corners of the outer perimeter 109 of the magnetic hub 108. For example, the pair of suspension wires 329, 330 are located at the exterior corner 335 of the magnetic hub 108. The positive terminals of the flexure arrangements 321-324 are separately electrically connected to the module control circuit 330 via a respective one of the suspension wires; and the negative terminals of the flexure arrangements 321-324 are separately electrically connected to the module control circuit 331 via a respective one of the suspension wires.

Whereas the lower flexure sections of each flexure arrangement 321-324 provide mechanical guidance of the respective lens carrier unit 102-105, the upper flexure sections of each flexure arrangement 321-324 are usable to route power signals.

A schematic of the magnet-and-coil arrangement of the lens positioning module 101 is shown in **Figure 2****,** which illustrates that same magnetic hub 108 is shared by the autofocusing (AF) drive arrangement, which includes first coils 302 and 304, and by the optical image stabilisation (OIS) drive arrangement, which includes second coil 305.

The disclosed lens positioning module reduces the actuator cost of a multi-camera arrangement by utilising globally radiating magnetic flux in relation to coil placement to providing a common actuator structure that can drive two or more cameras, with a single magnet-and-coil system for auto-focussing (AF) and optical image stabilisation (OIS). This provides for high integration efficiency and zero mutual interference.

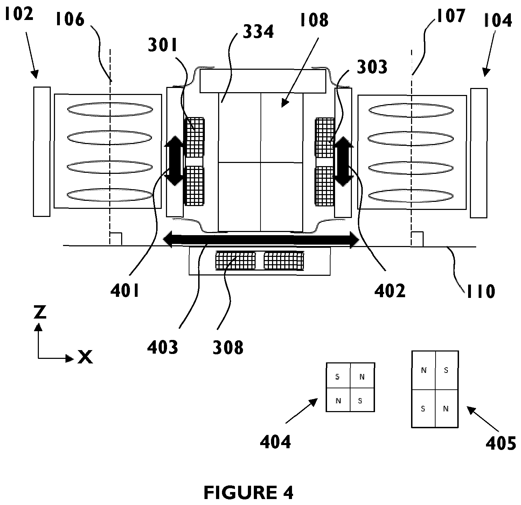

Reference will now be made in particular to **Figure 4****,** which illustrates lens positioning of the magnet-and-coil arrangement of the lens positioning module 101 of the first example.

Each of the lens carrier units is movable along its longitudinal axis independently. Hence movement of lens carrier unit 102 its longitudinal axis 106, in either of the directions indicated by arrow 401, can be effected, by co-operation of its associated first coil 301 and the magnetic hub 108, separately of lens carrier unit 104, movement of which along its longitudinal axis 107, in either of the directions indicated by arrow 402, can be effected by co-operation of its associated first coil 303 and the magnetic hub 108. However, the lens carrier units are together in at least one direction parallel to the base plane. Hence, the lens carrier units 102 and 104, along with lens carrier units 103 and 105 that are not shown in this Figure, are movable in either of the directions indicated by arrow 403.

In this example, the magnetic element 334 comprise a plurality of magnets. A top view 404 and a bottom view 405 illustrate an example pole arrangement of the magnetic hub 108.

The lens carrier units 102-105 may be any suitable type, for example the hollow barrel type illustrated, and may comprise any suitable lens arrangement. The lens positioning module 101 may be used with or more different types of camera lenses, for example: macro, wide-angle, ultra wide-angle, telephoto. Thermal imaging lenses and spectral camera lenses are other types of lens that may be selected.

The first coils 301-304 and second coils 305-308 may be any suitable type, for example copper coils having a donut shape as illustrated.

In this example, the flexure arrangements 321-324 are fabricated from a suitable metal.

The optical image stabilisation (OIS) drive arrangement may comprise any suitable guide system, for example a ball guide system or a linear guide system.

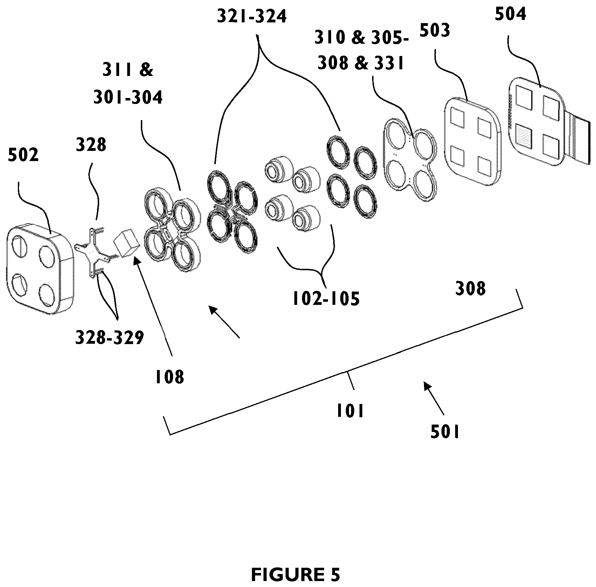

An exploded view of a lens unit 501 according to a first example, the lens unit comprising the lens positioning module 101 of the first example is shown in **Figure 5****.**

The lens unit 501 further comprises a cover 502, which in this example is a metal cover fabricated from any suitable metal material, a sensor cover 503, which in this example comprises infrared (IR) filters, and a sensor board 504.

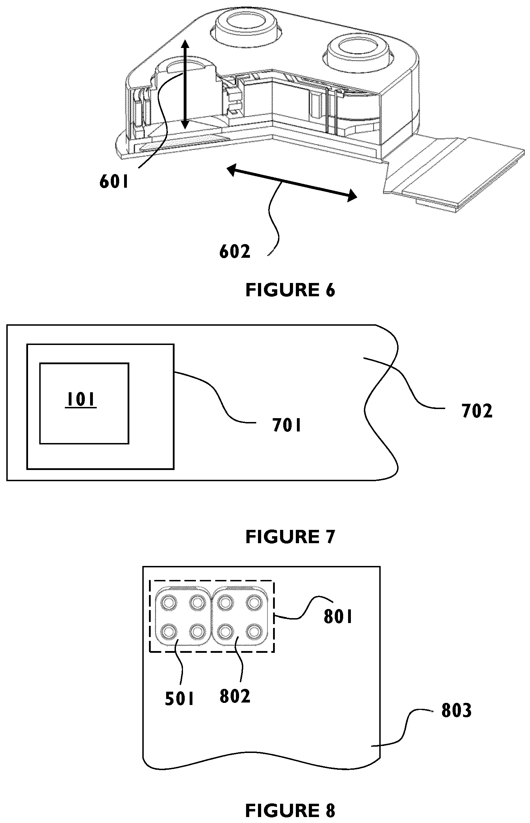

A sectional view of the assembled lens unit 501 is shown in **Figure 6****.**

Arrow 601 indicates the directions of movement of an individual lens carrier unit by its respective auto-focussing (AF) drive arrangement and arrow 602 indicates example directions that the individual lens carrier units can be moved by the common optical image stabilisation (OIS) drive arrangement. Whereas each auto-focussing (AF) drive arrangement can effect movement in a vertical direction, the optical image stabilisation (OIS) drive arrangement can effect movement in a horizontal direction.

The lens positioning module 101 may be comprised by a camera 701, as illustrated in **Figure 7****.** The camera 701 may be a camera of a portable telecommunications device 702.

A camera 801 comprising lens unit 501 and a second lens unit 802 is shown in **Figure 8****.** The lens unit 802 is like the lens unit 501, and both lens units therefore comprise a lens positioning module 101 according to the first example. The lens positioning module 101 of the second lens unit 802 is positioned adjacent the lens positioning module 101 of the lens unit 501. Hence, the camera 801 comprises two like lens positioning modules that are positioned adjacent each other.

In the example illustrated in **Figure 8****,** the camera 801 is comprised by a portable telecommunications device 803, such as a smartphone or other suitable handset.

The lens positioning module 101 enables multiple cameras to be positioned in close proximity, and provide flexibility as to placement within the device architecture.

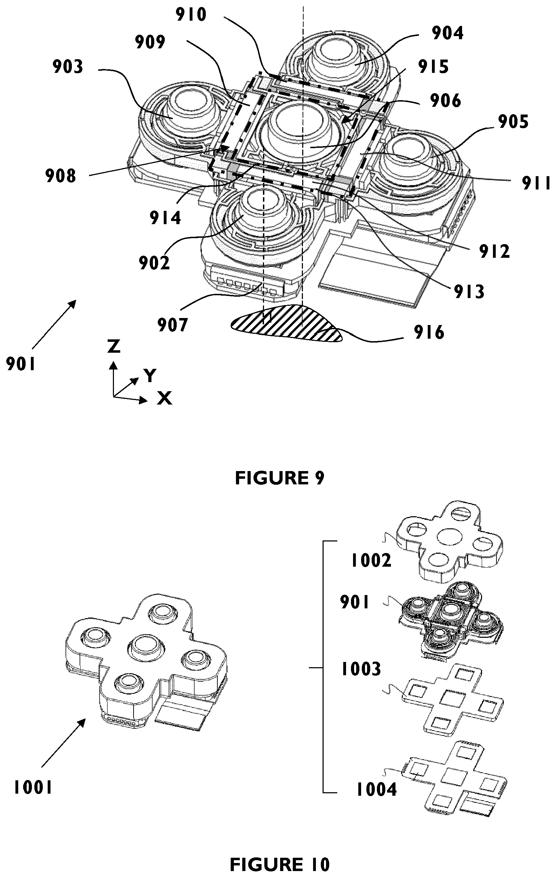

A lens positioning module 901 according to a second specific example will now be described with reference to **Figures 9 to 15****.** The description of the lens positioning module 901 will focus mainly on features that differ from the lens positioning module 101, although features in common will also be mentioned.

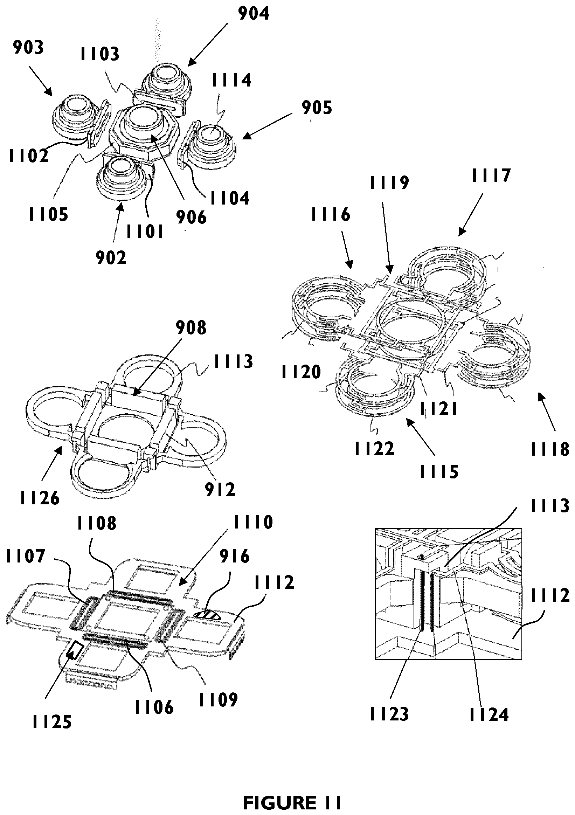

Reference is made initially to **Figures 9** **and** **11****.** The lens positioning module 901 comprises two or more, in this example five, lens carrier units 902-906. Each of the lens carrier units 902-905 has a longitudinal axis, such as longitudinal axis 907 of lens carrier unit 902. The lens positioning module 101 further comprises a magnetic hub 908.

The magnetic hub 908 comprises a group of four magnetic elements 909, 910, 911, 912 that arranged to form a hollow, discontinuous quadrate shape.

The magnetic hub 908 has an outer perimeter, indicated at 913, and an inner perimeter, indicated at 914. The outer perimeter 913 of the magnetic hub 908 is quadrate, comprising four exterior sides and four exterior corners. The inner perimeter 914 of the magnetic hub 908 defines an interior region 915.

One of the five lens carrier units, lens carrier unit 906, is positioned in the interior region 915 and a respective one of the other four lens carrier units, lens carrier units 902-905, is positioned along a respective one of the four exterior sides of the outer perimeter 913.

Thus, lens carrier units 902-905 are spaced around the outer perimeter 913 of the magnetic hub 908 and lens carrier unit 906 is within the inner perimeter 914 of the magnetic hub 908.

The longitudinal axes of the lens carrier units 902-906 are oriented perpendicular to a base plane, indicated at 916.

Cartesian co-ordinate axes are shown, with the Z-axis indicating the longitudinal axes of the lens carrier units and the X-axes and Y-axes indicating the 2-dimensional base plane.

A lens unit 1001 according to a second example, the lens unit comprising the lens positioning module 901 of the second example is shown in **Figure 10****.**

The lens unit 1001 further comprises a cover 1002, a sensor cover 1003, and a sensor board 1004.

Each lens carrier unit 902-906 is associated with a respective auto-focus (AF) drive arrangement, each auto-focus (AF) drive arrangement comprising a respective first coil 1101-1105 co-operable with the magnetic hub 908 to separately move the associated lens carrier unit 902-906 along its longitudinal axis. Thus, lens carrier unit 902 is associated with a respective auto-focus (AF) drive arrangement, comprising a first coil 1101 co-operable with the magnetic hub 908 to separately move the lens carrier unit 902 along its longitudinal axis 106 from any of the other lens carrier units 903-906.

The lens carrier units 902-106 are collectively associated with a common optical image stabilisation (OIS) drive arrangement. The optical image stabilisation (OIS) drive arrangement comprising two or more, in this example four, second coils 1106-1109 and co-operable with the magnetic hub 908 to move the lens carrier units 902-905 unitedly in at least one direction parallel to the base plane 916.

In this example, the base plane 916 is coincident with a surface, in this illustrated example an upper surface 1111, of a base portion 1112 that the second coils 1106-1109 of the optical image stabilisation (OIS) drive arrangement are carried by. In this example also, the second coils 1106-1109 of the optical image stabilisation (OIS) drive arrangement are embedded within the base portion 1112.

In this second example, the first coil 1105 of the lens carrier unit 906 positioned in the interior region 915 is parallel to the second coils 1106-1109 and the first coils 1101-1104 of the other four lens carrier units 902-905 are oriented perpendicular to the second coils 1106-1109.

The first coils 1101-1105 and second coils 1106-1109 may be any suitable type, for example copper coils having a donut or ring shape; the first coil 1105 of the lens carrier unit 906 positioned in the interior region 915 may have a ring shape and the other first coils 1101-1104 and the second coils 1106-1109 may have donut shape.

The lens positioning module 901 further comprises a carrier frame 1113 for guiding united movement of the lens carrier units 902-906 by the optical image stabilisation (OIS) drive arrangement. The magnetic hub 908 and each lens carrier unit 902-906 is located in a respective receiving region defined by the carrier frame 1113.

A lens barrel of each lens carrier unit 902-906, such as lens barrel 1114 of lens carrier unit 905, is suspended from the carrier frame 1113 by a respective flexure arrangement 1115-1119, each of which comprises first and second upper flexure sections and a lower flexure section, such as first and second upper flexure sections 1120, 1121 and lower flexure section 1122 of flexure arrangement 1115.

A first flexure section of each flexure arrangement 1115-1119 has a positive terminal, and a second flexure section of each flexure arrangement 1115-1119 has a negative terminal.

Each lens carrier unit is electrically connected to its associated first coil via its respective flexure arrangement, such as lens carrier unit 902 being electrically connected to its associated first coil 1101 by its respective flexure arrangement 1115.

In this example, the first upper flexure sections of the flexure arrangements 1115-1119 are connected to a common ground, and positive lines are routed through the second upper flexure sections of the flexure arrangements 1115-1119. The lower flexure sections of the flexure arrangements 1115-1119 provide mechanical guidance to the lens carrier units 902-906.

As illustrated, two or more suspension wires, such as suspension wires 1123, 1124, extend between the base portion 1112 and the carrier frame 1113, for guiding movement of the carrier frame 11131 relative to the base portion 1112 by the optical image stabilisation (OIS) drive arrangement.

The base portion 1112 carries a module control circuit, indicated generally at 1125. In this example, the base portion 1112 is a printed wiring board (PWB).

The first coil associated with each lens carrier unit is electrically connected to the module control circuit via its respective flexure arrangement and two or more suspension wires, such as first coil 1101 associated with lens carrier unit 902 being electrically connected to module control circuit 1125 by the two suspension wires 1123, 1124.

In this second example, the lens positioning module 901 comprises four pairs of suspension wires, each pair of the four pairs of suspension wires positioned at a respective one of the four exterior corners of the outer perimeter 913 of the magnetic hub 909. For example, the pair of suspension wires 1123, 1124 are located at the exterior corner 1126 of the magnetic hub 908. In this example, there are hence 8 suspension wires, 5 of which are arranged to handle positive voltage signals, one to each of the first coils, and another one of which is arranged to handle a common negative, grounding signal.

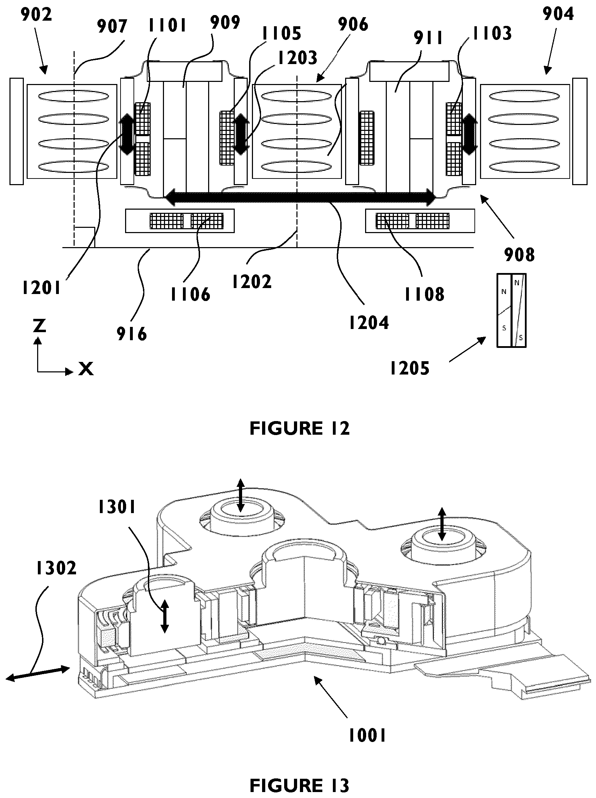

Reference will now be made in particular to **Figure 12****,** which illustrates lens positioning of the magnet-and-coil arrangement of the lens positioning module 901 of the second example.

Each of the lens carrier units is movable along its longitudinal axis independently. Hence movement of lens carrier unit 902 its longitudinal axis 907, in either of the directions indicated by arrow 1201, can be effected, by co-operation of its associated first coil 1101 and the magnetic hub 908, separately of lens carrier unit 906, movement of which along its longitudinal axis 1202, in either of the directions indicated by arrow 1203, can be effected by co-operation of its associated first coil 1203 and the magnetic hub 908. However, the lens carrier units are together in at least one direction parallel to the base plane. Hence, the lens carrier units 902, 906 and 904, along with lens carrier units 903 and 905 that are not shown in this Figure, are movable in either of the directions indicated by arrow 1204.

In this example, each of the magnetic elements, such as magnetic elements 909 and 911 comprise a plurality of magnets. A view 1205 illustrate an example pole arrangement of one of the magnetic elements 909-912.

A sectional view of the assembled lens unit 1001 of **Figure 10** is shown in **Figure 13****.**

Arrow 1301 indicates the directions of movement of an individual lens carrier unit by its respective auto-focussing (AF) drive arrangement and arrow 1302 indicates example directions that the individual lens carrier units can be moved by the common optical image stabilisation (OIS) drive arrangement. Whereas each auto-focussing (AF) drive arrangement can effect movement in a vertical direction, the optical image stabilisation (OIS) drive arrangement can effect movement in a horizontal direction.

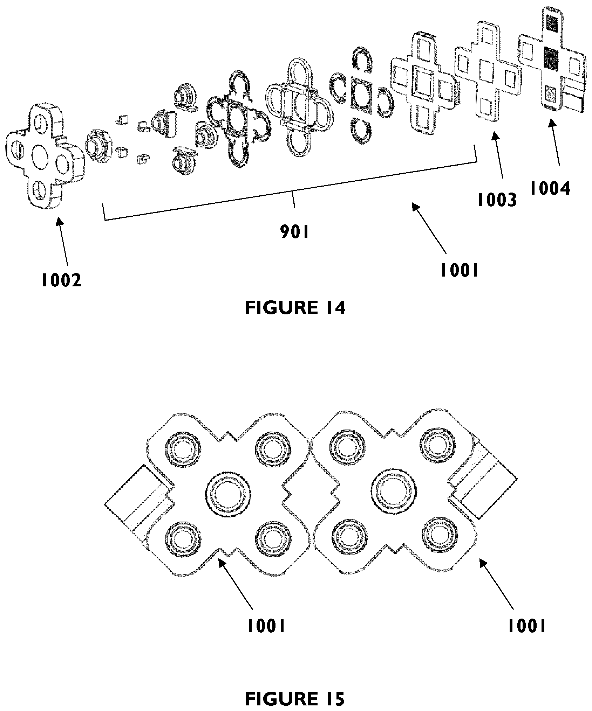

An exploded view of the assembled lens unit 1001 of **Figure 10** is shown in **Figure 14****.**

As illustrated in **Figure 15****,** two of the lens units 1001, each comprising a lens positioning module according to the second example, can be arranged side-by-side, in close proximity to each other, without experiencing interference.

Using a lens positioning module as disclosed herein, 4-5 separate cameras of a single unit can be integrated into a device, with reduced actuator cost. Furthermore, two units can be placed adjacent to each other, without interference, allowing 8-10 cameras to be integrated into a device with the associated reduced actuator cost. The lens positioning module disclosed herein allows for multiple cameras to be positioned in an arrangement within a particular area that may not be achievable with known actuator designs.

## Claims

1. A lens positioning module (101; 901), comprising:
two or more lens carrier units (102-105), each lens carrier unit (102-105) having a longitudinal axis (106, 107);
a magnetic hub (108) comprising at least one magnetic element (334);
the two or more lens carrier units (102-105) spaced around an outer perimeter (109) of the magnetic hub (108) with the longitudinal axes (106, 107) of the lens carrier units (102-105) oriented perpendicular to a base plane (110);
each lens carrier unit (102-105) associated with a respective auto-focus (AF) drive arrangement, each auto-focus (AF) drive arrangement comprising a respective first coil (301-304) co-operable with the magnetic hub (108) to separately move the associated lens carrier unit (102-105) along its longitudinal axis (106, 107); and
the two or more lens carrier units (102-105) collectively associated with a common optical image stabilisation (OIS) drive arrangement, the optical image stabilisation (OIS) drive arrangement comprising two or more second coils (305-308) and co-operable with the magnetic hub (108) to move the two or more lens carrier units (102-105) unitedly in at least one direction (403) parallel to the base plane (110);
further comprising a carrier frame (311) for guiding united movement of the lens carrier units (102-105) by the optical image stabilisation (OIS) drive arrangement, in which the magnetic hub (108) and each lens carrier unit (102-105) is located in a respective receiving region (312-316) defined by the carrier frame (311);
wherein the second coils (305-308) of the optical image stabilisation (OIS) drive arrangement are carried by a base portion (310);
a lens barrel (317-320) of each lens carrier unit (102-105) is suspended from the carrier frame (311) by a respective flexure arrangement (321-324); and
two or more suspension wires (329, 330) extend between the base portion (310) and the carrier frame (311) for guiding movement of the carrier frame (311) relative to the base portion (310) by the optical image stabilisation (OIS) drive arrangement; and
wherein the magnetic hub (108) comprises a single said magnetic element (334), said outer perimeter (109) of the magnetic hub (108) is quadrate, comprising four exterior sides and four exterior corners; and
wherein the two or more lens carrier units (102-105) comprises four lens carrier units, a respective one of the four lens carrier units positioned along a respective one of the four exterior sides of the outer perimeter (109).

2. The lens positioning module (101; 901) of claim 1, in which the base portion (310) carries a module control circuit (331),
each flexure arrangement (321-324) comprises a first flexure section (325) having a positive terminal (332) and a second flexure section (326) having a negative terminal (333), each lens carrier unit (102-105) electrically connected to its associated first coil (301-304) via its respective flexure arrangement (321-324); and
the first coil (301-304) associated with each lens carrier unit (102-105) electrically connected to the module control circuit (331) via said respective flexure arrangement (321-324) and said two or more suspension wires (329, 330).

3. The lens positioning module (101) of claim 1, in which the first coils (301-304) of the four lens carrier units (102-105) are oriented perpendicular to the second coils (305-308).

4. The lens positioning module (101) of claim 1 and claim 3, in which the two or more suspension wires (329, 330) comprises four pairs of suspension wires, each pair of the four pairs of suspension wires positioned at a respective one of the four exterior corners (334) of the outer perimeter (109);
the positive terminals (332) of the flexure arrangements (321-324) separately electrically connected to the module control circuit (331) via a respective one of the suspension wires (329, 330); and
the negative terminals (333) of the flexure arrangements (321-324) separately electrically connected to the module control circuit (331) via a respective one of the suspension wires (329, 330).

5. The lens positioning module (101) of claim 1 or 2, in which the two or more suspension wires (329, 330) comprises four pairs of suspension wires, each pair of the four pairs of suspension wires positioned at a respective one of the four exterior corners of the outer perimeter (109);
the positive terminals (332) of the flexure arrangements (321-324) separately electrically connected to the module control circuit (331) via a respective one of the suspension wires (329, 330); and
the negative terminals (333) of the flexure arrangements (321-324) electrically connected to each other and commonly electrically connected to the module control circuit (331) via a further one of the suspension wires (329, 330).

6. A lens positioning module (101; 901), comprising:
two or more lens carrier units (102-105), each lens carrier unit (102-105) having a longitudinal axis (106, 107);
a magnetic hub (108) comprising at least one magnetic element (334);
the two or more lens carrier units (102-105) spaced around an outer perimeter (109) of the magnetic hub (108) with the longitudinal axes (106, 107) of the lens carrier units (102-105) oriented perpendicular to a base plane (110);
each lens carrier unit (102-105) associated with a respective auto-focus (AF) drive arrangement, each auto-focus (AF) drive arrangement comprising a respective first coil (301-304) co-operable with the magnetic hub (108) to separately move the associated lens carrier unit (102-105) along its longitudinal axis (106, 107); and
the two or more lens carrier units (102-105) collectively associated with a common optical image stabilisation (OIS) drive arrangement, the optical image stabilisation (OIS) drive arrangement comprising two or more second coils (305-308) and co-operable with the magnetic hub (108) to move the two or more lens carrier units (102-105) unitedly in at least one direction (403) parallel to the base plane (110);
further comprising a carrier frame (311) for guiding united movement of the lens carrier units (102-105) by the optical image stabilisation (OIS) drive arrangement, in which the magnetic hub (108) and each lens carrier unit (102-105) is located in a respective receiving region (312-316) defined by the carrier frame (311);
wherein the second coils (305-308) of the optical image stabilisation (OIS) drive arrangement are carried by a base portion (310);
a lens barrel (317-320) of each lens carrier unit (102-105) is suspended from the carrier frame (311) by a respective flexure arrangement (321-324); and
two or more suspension wires (329, 330) extend between the base portion (310) and the carrier frame (311) for guiding movement of the carrier frame (311) relative to the base portion (310) by the optical image stabilisation (OIS) drive arrangement;
wherein said magnetic hub (908) comprises a group of four said magnetic elements (909-912) arranged to form a hollow, discontinuous quadrate shape;
said outer perimeter (913) of the magnetic hub (908) is quadrate, comprising four exterior sides and four exterior corners; and
an inner perimeter (914) of the magnetic hub (908) defines an interior region (915); and
wherein the two or more lens carrier units (902-906) comprises five lens carrier units, one lens carrier unit (906) of the five lens carrier units positioned in the interior region (915) and a respective one of the other four lens carrier units (902-905) of the five lens carrier units positioned along a respective one of the four exterior sides of the outer perimeter (913).

7. The lens positioning module (101) of claim 6, in which the first coil (1105) of the lens carrier unit (906) positioned in the interior region (915) is parallel to the second coils (1106-1109) and the first coils (1101-1104) of the other four lens carrier units (902-905) are oriented perpendicular to the second coils (1106-1109).

8. The lens positioning module (101) of claim 6
wherein the base portion (310) carries a module control circuit (331),
each flexure arrangement (321-324) comprises a first flexure section (325) having a positive terminal (332) and a second flexure section (326) having a negative terminal (333), each lens carrier unit (102-105) electrically connected to its associated first coil (301-304) via its respective flexure arrangement (321-324); and
the first coil (301-304) associated with each lens carrier unit (102-105) electrically connected to the module control circuit (331) via said respective flexure arrangement (321-324) and said two or more suspension wires (329, 330); and
wherein the two or more suspension wires (1123, 1124) comprises four pairs of suspension wires, each pair of the four pairs of suspension wires positioned at a respective one of the four exterior corners (1126) of the outer perimeter (913);
the positive terminals of the flexure arrangements (1115-1119) separately electrically connected to the module control circuit (1125) via a respective one of the suspension wires (1123, 1124); and
the negative terminals of the flexure arrangements (1115-1119) electrically connected to each other and commonly electrically connected to the module control circuit (1125) via a further one of the suspension wires (1123, 1124).

9. The lens positioning module (101; 901) of any preceding claim, in which the optical image stabilisation (OIS) drive arrangement comprises one of: a ball guide system or a linear guide system.

10. A camera (701; 801) comprising a lens positioning module, the lens positioning module (101; 901) according to any of claims 1 to 9.

11. The camera (801) of claim 10, further comprising a second lens positioning module positioned adjacent the lens positioning module (101; 901), the second lens positioning module (101; 901) according to any of claims 1 to 10.

12. A portable telecommunications device (702, 803) comprising a camera, the camera (701; 801) according to claim 10 or claim 11.

## Patentansprüche

1. Linsenpositionierungsmodul (101; 901), umfassend:
zwei oder mehr Linsenträgereinheiten (102-105), wobei jede Linsenträgereinheit (102-105) eine Längsachse (106, 107) aufweist;
eine Magnetnabe (108), die mindestens ein magnetisches Element (334) umfasst;
wobei die zwei oder mehr Linsenträgereinheiten (102-105) um einen äußeren Umfang (109) der Magnetnabe (108) beabstandet sind, wobei die Längsachse (106, 107) der Linsenträgereinheiten (102-105) senkrecht zu einer Basisebene (110) ausgerichtet ist;
wobei jede Linsenträgereinheit (102-105) einer jeweiligen Autofokusansteuerungsanordnung (AF-Ansteuerungsanordnung) zugeordnet ist, wobei jede Autofokusansteuerungsanordnung (AF-Ansteuerungsanordnung) eine jeweilige erste Spule (301-304) umfasst, die mit der Magnetnabe (108) gemeinsam betrieben werden kann, um die zugeordnete Linsenträgereinheit (102-105) entlang ihrer Längsachse (106, 107) getrennt zu bewegen; und
wobei die zwei oder mehr Linsenträgereinheiten (102-105) gemeinsam einer gemeinsamen Ansteuerungsanordnung zur Stabilisierung eines optischen Bildes (OIS-Ansteuerungsanordnung) zugeordnet sind, wobei die Ansteuerungsanordnung zur Stabilisierung eines optischen Bildes (OIS-Ansteuerungsanordnung) zwei oder mehr zweite Spulen (305-308) umfasst und mit der Magnetnabe (108) gemeinsam betrieben werden kann, um die zwei oder mehr Linsenträgereinheiten (102-105) vereint in mindestens einer Richtung (403) parallel zu der Basisebene (110) zu bewegen;
ferner umfassend einen Trägerrahmen (311), um eine vereinte Bewegung der Linsenträgereinheiten (102-105) durch die Ansteuerungsanordnung zur Stabilisierung eines optischen Bildes (OIS-Ansteuerungsanordnung) zu lenken, wobei sich die Magnetnabe (108) und jede Linsenträgereinheit (102-105) in einem jeweiligen Empfangsbereich (312-316), der durch den Trägerrahmen (311) definiert ist, befinden;
wobei die zweiten Spulen (305-308) der Ansteuerungsanordnung zur Stabilisierung eines optischen Bildes (OIS-Ansteuerungsanordnung) durch einen Basisteil (310) getragen werden;
wobei ein Objektivtubus (317-320) jeder Linsenträgereinheit (102-105) am Trägerrahmen (311) durch eine jeweilige Biegungsanordnung (321-324) aufgehängt ist; und
sich zwei oder mehr Aufhängungsdrähte (329, 330) zwischen dem Basisteil (310) und dem Trägerrahmen (311) erstrecken, um eine Bewegung des Trägerrahmens (311) relativ zu dem Basisteil (310) durch die Ansteuerungsanordnung zur Stabilisierung eines optischen Bildes (OIS-Ansteuerungsanordnung) zu lenken; und
wobei die Magnetnabe (108) ein einzelnes magnetisches Element (334) umfasst, wobei der äußere Umfang (109) der Magnetnabe (108) quadratisch ist und vier Außenseiten und vier Außenecken umfasst; und
wobei die zwei oder mehr Linsenträgereinheiten (102-105) vier Linsenträgereinheiten umfassen, wobei eine jeweilige der vier Linsenträgereinheiten entlang einer jeweiligen der vier Außenseiten des äußeren Umfangs (109) positioniert ist.

2. Linsenpositionierungsmodul (101; 901) nach Anspruch 1, in dem der Basisteil (310) eine Modulsteuerschaltung (331) trägt,
wobei jede Biegungsanordnung (321-324) einen ersten Biegungsabschnitt (325) mit einem positiven Anschluss (332) und einen zweiten Biegungsabschnitt (326) mit einem negativen Anschluss (333) umfasst, wobei jede Linsenträgereinheit (102-105) mit ihrer zugeordneten ersten Spule (301-304) über ihre jeweilige Biegungsanordnung (321-324) elektrisch verbunden ist; und
die erste Spule (301-304) jeder Linsenträgereinheit (102-105), die mit der Modulsteuerschaltung (331) über die jeweilige Biegungsanordnung (321-324) und die zwei oder mehr Aufhängungsdrähte (329, 330) elektrisch verbunden ist, zugeordnet ist.

3. Linsenpositionierungsmodul (101) nach Anspruch 1, in dem die ersten Spulen (301-304) der vier Linsenträgereinheiten (102-105) senkrecht zu den zweiten Spulen (305-308) ausgerichtet sind.

4. Linsenpositionierungsmodul (101) nach Anspruch 1 und Anspruch 3, in dem die zwei oder mehr Aufhängungsdrähte (329, 330) vier Paare von Aufhängungsdrähten umfassen, wobei jedes Paar der vier Paare von Aufhängungsdrähten an einer jeweiligen der vier Außenecken (334) des äußeren Umfangs (109) positioniert ist;
wobei die positiven Anschlüsse (332) der Biegungsanordnungen (321-324) mit der Modulsteuerschaltung (331) über einen jeweiligen der Aufhängungsdrähte (329, 330) getrennt elektrisch verbunden sind; und
die negativen Anschlüsse (333) der Biegungsanordnungen (321-324) mit der Modulsteuerschaltung (331) über einen jeweiligen der Aufhängungsdrähte (329, 330) getrennt elektrisch verbunden sind.

5. Linsenpositionierungsmodul (101) nach Anspruch 1 oder 2, in dem die zwei oder mehr Aufhängungsdrähte (329, 330) vier Paare von Aufhängungsdrähten umfassen, wobei jedes Paar der vier Paare von Aufhängungsdrähten an einer jeweiligen der vier Außenecken des äußeren Umfangs (109) positioniert ist;
wobei die positiven Anschlüsse (332) der Biegungsanordnungen (321-324) mit der Modulsteuerschaltung (331) über einen jeweiligen der Aufhängungsdrähte (329, 330) getrennt elektrisch verbunden sind; und
die negativen Anschlüsse (333) der Biegungsanordnungen (321-324) miteinander elektrisch verbunden sind und gemeinsam mit der Modulsteuerschaltung (331) über einen weiteren der Aufhängungsdrähte (329, 330) elektrisch verbunden sind.

6. Linsenpositionierungsmodul (101; 901), umfassend:
zwei oder mehr Linsenträgereinheiten (102-105), wobei jede Linsenträgereinheit (102-105) eine Längsachse (106, 107) aufweist;
eine Magnetnabe (108), die mindestens ein magnetisches Element (334) umfasst;
wobei die zwei oder mehr Linsenträgereinheiten (102-105) um einen äußeren Umfang (109) der Magnetnabe (108) beabstandet sind, wobei die Längsachse (106, 107) der Linsenträgereinheiten (102-105) senkrecht zu einer Basisebene (110) ausgerichtet ist;
wobei jede Linsenträgereinheit (102-105) einer jeweiligen Autofokusansteuerungsanordnung (AF-Ansteuerungsanordnung) zugeordnet ist, wobei jede Autofokusansteuerungsanordnung (AF-Ansteuerungsanordnung) eine jeweilige erste Spule (301-304) umfasst, die mit der Magnetnabe (108) gemeinsam betrieben werden kann, um die zugeordnete Linsenträgereinheit (102-105) entlang ihrer Längsachse (106, 107) getrennt zu bewegen; und
die zwei oder mehr Linsenträgereinheiten (102-105) gemeinsam einer gemeinsamen Ansteuerungsanordnung zur Stabilisierung eines optischen Bildes (OIS-Ansteuerungsanordnung) zugeordnet sind, wobei die Ansteuerungsanordnung zur Stabilisierung eines optischen Bildes (OIS-Ansteuerungsanordnung) zwei oder mehr zweite Spulen (305-308) umfasst und mit der Magnetnabe (108) gemeinsam betrieben werden kann, um die zwei oder mehr Linsenträgereinheiten (102-105) vereint in mindestens einer Richtung (403) parallel zu der Basisebene (110) zu bewegen;
ferner umfassend einen Trägerrahmen (311), um ein vereinte Bewegung der Linsenträgereinheiten (102-105) durch die Ansteuerungsanordnung zur Stabilisierung eines optischen Bildes (OIS-Ansteuerungsanordnung) zu lenken, wobei sich die Magnetnabe (108) und jede Linsenträgereinheit (120-105) in einem jeweiligen Empfangsbereich (312-316), der durch den Trägerrahmen (311) definiert ist, befinden;
wobei die zweiten Spulen (305-308) der Ansteuerungsanordnung zur Stabilisierung eines optischen Bildes (OIS-Ansteuerungsanordnung) durch einen Basisteil (310) getragen werden;
wobei ein Objektivtubus (317-320) jeder Linsenträgereinheit (102-105) am Trägerrahmen (311) durch eine jeweilige Biegungsanordnung (321-324) aufgehängt ist; und
zwei oder mehr Aufhängungsdrähte (329, 330) sich zwischen dem Basisteil (310) und dem Trägerrahmen (311) erstrecken, um eine Bewegung des Trägerrahmens (311) relativ zu dem Basisteil (310) durch die Ansteuerungsanordnung zur Stabilisierung eines optischen Bildes (OIS-Ansteuerungsanordnung) zu lenken; und
wobei die Magnetnabe (908) eine Gruppe von vier magnetischen Elementen (909-912) umfasst, die so angeordnet sind, dass sie eine hohle nicht kontinuierliche quadratische Form bilden;
wobei der äußere Umfang (913) der Magnetnabe (908) quadratisch ist und vier Außenseiten und vier Außenecken umfasst; und
ein innerer Umfang (914) der Magnetnabe einen inneren Bereich (915) definiert; und
wobei die zwei oder mehr Linsenträgereinheiten (902-906) fünf Linsenträgereinheiten umfassen, wobei eine Linsenträgereinheit (906) der fünf Linsenträgereinheiten in dem inneren Bereich (915) positioniert ist und eine jeweilige der anderen vier Linsenträgereinheiten (902-905) der fünf Linsenträgereinheiten entlang einer jeweiligen der vier Außenseiten des äußeren Umfangs (913) positioniert ist.

7. Linsenpositionierungsmodul (101) nach Anspruch 6, in dem die erste Spule (1105) der Linsenträgereinheit (906), die in dem inneren Bereich (915) positioniert ist, parallel zu den zweiten Spulen (1106-1109) ist und die ersten Spulen (1101-1104) der anderen vier Linsenträgereinheiten (902-905) senkrecht zu den zweiten Spulen (1106-1109) ausgerichtet sind.

8. Linsenpositionierungsmodul (101) nach Anspruch 6,
wobei der Basisteil (310) eine Modulsteuerschaltung (331) trägt,
wobei jede Biegungsanordnung (321-324) einen ersten Biegungsabschnitt (325) mit einem positiven Anschluss (332) und einen zweiten Biegungsabschnitt (326) mit einem negativen Anschluss (333) umfasst, wobei jede Linsenträgereinheit (102-105) mit ihrer zugeordneten ersten Spule (301-304) über ihre jeweilige Biegungsanordnung (321-324) elektrisch verbunden ist; und
die erste Spule (301-304), die jeder Linsenträgereinheit (102-105) zugeordnet ist, mit der Modulsteuerschaltung (331) über die jeweilige Biegungsanordnung (321-324) und die zwei oder mehr Aufhängungsdrähte (329, 330) elektrisch verbunden ist; und
wobei die zwei oder mehr Aufhängungsdrähte (1123, 1124) vier Paare von Aufhängungsdrähten umfassen, wobei jedes Paar der vier Paare von Aufhängungsdrähten an einer jeweiligen der vier Außenecken (1126) des äußeren Umfangs (913) positioniert ist;
wobei die positiven Anschlüsse der Biegungsanordnungen (1115-1119) mit der Modulsteuerschaltung (1125) über einen jeweiligen der Aufhängungsdrähte (1123, 1124) getrennt elektrisch verbunden sind; und
die negativen Anschlüsse der Biegungsanordnungen (1115-1119) miteinander elektrisch verbunden sind und mit der Modulsteuerschaltung (1125) über einen weiteren der Aufhängungsdrähte (1123, 1124) gemeinsam elektrisch verbunden sind.

9. Linsenpositionierungsmodul (101; 901) nach einem vorhergehenden Anspruch, in dem die Ansteuerungsanordnung zur Stabilisierung eines optischen Bildes (OIS-Ansteuerungsanordnung) eines umfasst von: einem Kugelführungssystem oder einem linearen Führungssystem.

10. Kamera (701; 801), die ein Linsenpositionierungsmodul umfasst, wobei das Linsenpositionierungsmodul (101; 901) nach einem der Ansprüche 1 bis 9 ist.

11. Kamera (801) nach Anspruch 10, die ferner ein zweites Linsenpositionierungsmodul umfasst, das benachbart zu dem Linsenpositionierungsmodul (101; 901) positioniert ist, wobei das zweite Linsenpositionierungsmodul (101; 901) nach einem der Ansprüche 1 bis 10 ist.

12. Tragbare Telekommunikationsvorrichtung (702, 803), die eine Kamera enthält, wobei die Kamera die Kamera (701; 801) nach Anspruch 10 oder Anspruch 11 ist.

## Revendications

1. Module (101 ; 901) de positionnement d'objectifs, comprenant :
au moins deux unités porte-objectif (102-105), chaque unité porte-objectif (102-105) possédant un axe longitudinal (106, 107) ;
un moyeu magnétique (108) comprenant au moins un élément magnétique (334) ;
les au moins deux unités porte-objectif (102-105) étant espacées autour d'un périmètre extérieur (109) du moyeu magnétique (108), les axes longitudinaux (106, 107) des unités porte-objectif (102-105) étant orientés perpendiculairement à un plan de base (110) ;
chaque unité porte-objectif (102-105) étant associée à un agencement d'entraînement de mise au point automatique (AF) respectif, chaque agencement d'entraînement de mise au point automatique (AF) comprenant une première bobine (301-304) respective apte à coopérer avec le moyeu magnétique (108) pour déplacer séparément l'unité porte-objectif (102-105) associée suivant son axe longitudinal (106, 107) ; et
les au moins deux unités porte-objectif (102-105) étant collectivement associées à un agencement d'entraînement de stabilisation optique d'image (OIS) commun, l'agencement d'entraînement de stabilisation optique d'image (OIS) comprenant au moins deux deuxièmes bobines (305-308) et étant apte à coopérer avec le moyeu magnétique (108) pour déplacer les au moins deux unités porte-objectif (102-105) de façon solidaire dans au moins une direction (403) parallèle au plan de base (110) ;
comprenant en outre un cadre porteur (311) destiné à guider le déplacement solidaire des unités porte-objectif (102-105) par l'agencement d'entraînement de stabilisation optique d'image (OIS), le moyeu magnétique (108) et chaque unité porte-objectif (102-105) étant situés dans une région de réception (312-316) respective définie par le cadre porteur (311) ;
dans lequel les deuxièmes bobines (305-308) de l'agencement d'entraînement de stabilisation optique d'image (OIS) sont portées par une partie formant base (310) ;
un barillet d'objectif (317-320) de chaque unité porte-objectif (102-105) est suspendu au cadre porteur (311) par un agencement flexible (321-324) respectif ; et
au moins deux fils de suspension (329, 330) s'étendent entre la partie formant base (310) et le cadre porteur (311) pour guider le déplacement du cadre porteur (311) par rapport à la partie formant base (310) par l'agencement d'entraînement de stabilisation optique d'image (OIS) ; et
dans lequel le moyeu magnétique (108) comprend un seul dit élément magnétique (334), ledit périmètre extérieur (109) du moyeu magnétique (108) est carré, comprenant quatre côtés extérieurs et quatre coins extérieurs ; et
dans lequel les au moins deux unités porte-objectif (102-105) comprennent quatre unités porte-objectif, une unité porte-objectif respective des quatre unités porte-objectif étant positionnée le long d'un côté extérieur respectif des quatre côtés extérieurs du périmètre extérieur (109).

2. Module (101 ; 901) de positionnement d'objectifs selon la revendication 1, dans lequel la partie formant base (310) porte un circuit de commande de module (331),
chaque agencement flexible (321-324) comprend une première section flexible (325) possédant une borne positive (332) et une deuxième section flexible (326) possédant une borne négative (333), chaque unité porte-objectif (102-105) étant connectée électriquement à sa première bobine (301-304) associée par le biais de son agencement flexible (321-324) respectif ; et
la première bobine (301-304) associée à chaque unité porte-objectif (102-105) étant connectée électriquement au circuit de commande de module (331) par le biais dudit agencement flexible (321-324) respectif et desdits au moins deux fils de suspension (329, 330).

3. Module (101) de positionnement d'objectifs selon la revendication 1, dans lequel les premières bobines (301-304) des quatre unités porte-objectif (102-105) sont orientées perpendiculairement aux deuxièmes bobines (305-308).

4. Module (101) de positionnement d'objectifs selon la revendication 1 et la revendication 3, dans lequel les au moins deux fils de suspension (329, 330) comprennent quatre paires de fils de suspension, chaque paire des quatre paires de fils de suspension étant positionnée à un coin extérieur respectif des quatre coins extérieurs (334) du périmètre extérieur (109) ;
les bornes positives (332) des agencements flexibles (321-324) étant séparément connectées électriquement au circuit de commande de module (331) par le biais d'un fil de suspension respectif des fils de suspension (329, 330) ; et
les bornes négatives (333) des agencements flexibles (321-324) étant séparément connectées électriquement au circuit de commande de module (331) par le biais d'un fil de suspension respectif des fils de suspension (329, 330).

5. Module (101) de positionnement d'objectifs selon la revendication 1 ou 2, dans lequel les au moins deux fils de suspension (329, 330) comprennent quatre paires de fils de suspension, chaque paire des quatre paires de fils de suspension étant positionnée à un coin extérieur respectif des quatre coins extérieurs du périmètre extérieur (109) ;
les bornes positives (332) des agencements flexibles (321-324) étant séparément connectées électriquement au circuit de commande de module (331) par le biais d'un fil de suspension respectif des fils de suspension (329, 330) ; et
les bornes négatives (333) des agencements flexibles (321-324) étant connectées électriquement entre elles et connectées électriquement en commun au circuit de commande de module (331) par le biais d'un autre des fils de suspension (329, 330).

6. Module (101 ; 901) de positionnement d'objectifs, comprenant :
au moins deux unités porte-objectif (102-105), chaque unité porte-objectif (102-105) possédant un axe longitudinal (106, 107) ;
un moyeu magnétique (108) comprenant au moins un élément magnétique (334) ;
les au moins deux unités porte-objectif (102-105) étant espacées autour d'un périmètre extérieur (109) du moyeu magnétique (108), les axes longitudinaux (106, 107) des unités porte-objectif (102-105) étant orientés perpendiculairement à un plan de base (110) ;
chaque unité porte-objectif (102-105) étant associée à un agencement d'entraînement de mise au point automatique (AF) respectif, chaque agencement d'entraînement de mise au point automatique (AF) comprenant une première bobine (301-304) respective apte à coopérer avec le moyeu magnétique (108) pour déplacer séparément l'unité porte-objectif (102-105) associée suivant son axe longitudinal (106, 107) ; et
les au moins deux unités porte-objectif (102-105) étant collectivement associées à un agencement d'entraînement de stabilisation optique d'image (OIS) commun, l'agencement d'entraînement de stabilisation optique d'image (OIS) comprenant au moins deux deuxièmes bobines (305-308) et étant apte à coopérer avec le moyeu magnétique (108) pour déplacer les au moins deux unités porte-objectif (102-105) de façon solidaire dans au moins une direction (403) parallèle au plan de base (110) ;
comprenant en outre un cadre porteur (311) destiné à guider le déplacement solidaire des unités porte-objectif (102-105) par l'agencement d'entraînement de stabilisation optique d'image (OIS), le moyeu magnétique (108) et chaque unité porte-objectif (102-105) étant situés dans une région de réception (312-316) respective définie par le cadre porteur (311) ;
dans lequel les deuxièmes bobines (305-308) de l'agencement d'entraînement de stabilisation optique d'image (OIS) sont portées par une partie formant base (310) ;
un barillet d'objectif (317-320) de chaque unité porte-objectif (102-105) est suspendu au cadre porteur (311) par un agencement flexible (321-324) respectif ; et
au moins deux fils de suspension (329, 330) s'étendent entre la partie formant base (310) et le cadre porteur (311) pour guider le déplacement du cadre porteur (311) par rapport à la partie formant base (310) par l'agencement d'entraînement de stabilisation optique d'image (OIS) ;
dans lequel ledit moyeu magnétique (908) comprend un groupe de quatre dits éléments magnétiques (909-912) agencés de manière à former une forme carrée creuse discontinue :
ledit périmètre extérieur (913) du moyeu magnétique (908) est carré, comprenant quatre côtés extérieurs et quatre coins extérieurs ; et
un périmètre intérieur (914) du moyeu magnétique (908) définit une région intérieure (915) ; et
dans lequel les au moins deux unités porte-objectif (902-906) comprennent cinq unités porte-objectif, une unité porte-objectif (906) des cinq unités porte-objectif étant positionnée dans la région intérieure (915) et une unité porte-objectif respective des quatre autres unités porte-objectif (902-905) des cinq unités porte-objectif étant positionnée le long d'un côté extérieur respectif des quatre côtés extérieurs du périmètre extérieur (913).

7. Module (101) de positionnement d'objectifs selon la revendication 6, dans lequel la première bobine (1105) de l'unité porte-objectif (906) positionnée dans la région intérieure (915) est parallèle aux deuxièmes bobines (1106-1109) et les premières bobines (1101-1104) des quatre autres unités porte-objectif (902, 905) sont orientées perpendiculairement aux deuxièmes bobines (1106-1109).

8. Module (101) de positionnement d'objectifs selon la revendication 6,
dans lequel la partie formant base (310) porte un circuit de commande de module (331), chaque agencement flexible (321-324) comprend une première section flexible (325) possédant une borne positive (332) et une deuxième section flexible (326) possédant une borne négative (333), chaque unité porte-objectif (102-105) étant connectée électriquement à sa première bobine (301-304) associée par le biais de son agencement flexible (321-324) respectif ; et
la première bobine (301-304) associée à chaque unité porte-objectif (102-105) étant connectée électriquement au circuit de commande de module (331) par le biais dudit agencement flexible (321-324) respectif et desdits au moins deux fils de suspension (329, 330) ; et
dans lequel les au moins deux fils de suspension (1123, 1124) comprennent quatre paires de fils de suspension, chaque paire des quatre paires de fils de suspension étant positionnée à un coin extérieur respectif des quatre coins extérieurs (1126) du périmètre extérieur (913) ;
les bornes positives des agencements flexibles (1115-1119) étant séparément connectées électriquement au circuit de commande de module (1125) par le biais d'un fil de suspension respectif des fils de suspension (1123, 1124) ; et
les bornes négatives des agencements flexibles (1115-1119) étant connectées électriquement entre elles et connectées électriquement en commun au circuit de commande de module (1125) par le biais d'un autre des fils de suspension (1123, 1124).

9. Module (101 ; 901) de positionnement d'objectifs selon l'une quelconque des revendications précédentes, dans lequel l'agencement d'entraînement de stabilisation optique d'image (OIS) comprend : soit un système de guidage à billes, soit un système de guidage linéaire.

10. Caméra (701 ; 801) comprenant un module de positionnement d'objectifs, le module (101; 901) de positionnement d'objectifs étant selon l'une quelconque des revendications 1 à 9.

11. Caméra (801) selon la revendication 10, comprenant en outre un deuxième module de positionnement d'objectifs positionné de façon adjacente au module (101 ; 901) de positionnement d'objectifs, le deuxième module (101 ; 901) de positionnement d'objectifs étant selon l'une quelconque des revendications 1 à 10.

12. Dispositif de télécommunications portable (702, 803), comprenant une caméra, la caméra (701 ; 801) étant selon la revendication 10 ou la revendication 11.
